# EUROPEAN PATENT APPLICATION

(11) **EP 4 683 361 A1**
(43) Date of publication of application: **21.01.2026**
(21) Application number: 24784042.4
(22) Date of filing: 15.03.2024
(51) Int. Cl.: H04W 8/18

(54) **SUBSCRIBER GO-OFFLINE METHOD AND SUBSCRIBER GO-OFFLINE APPARATUS**

(30) Priority: 07.04.2023 CN 202310394645
(71) Applicant: Huawei Technologies Co., Ltd., Shenzhen, Guangdong 518129 (CN)
(72) Inventor: HE, Wen, Shenzhen, Guangdong 518129 (CN); PENG, Jiang, Shenzhen, Guangdong 518129 (CN)
(74) Representative: Gill Jennings & Every LLP
(86) International application number: PCT/CN2024/081798
(87) International publication number: WO 2024/207957

(57) **Abstract**

This application provides a user offline method and a user offline apparatus. The method may be applied to a first user data management device. The method may include: determining a target user, where user data of the target user is to be migrated from a second user data management device to the first user data management device; and sending first information to a first network element accessed by the target user, where the first information indicates the first network element to drive the target user to go offline. According to the method provided in this application, the first user data management device drives the user to go offline, to help drive the user to go offline.

## Description

This application claims priority to Chinese Patent Application No. 202310394645.7, filed with the China National Intellectual Property Administration on April 7, 2023 and entitled "USER OFFLINE METHOD AND USER OFFLINE APPARATUS", which is incorporated herein by reference in its entirety.

### TECHNICAL FIELD

This application relates to the field of communication, and in particular, to a user offline method and a user offline apparatus.

### BACKGROUND

In a mobile communication network, a user data management device, such as a home subscriber server (home subscriber server, HSS) or a unified data management (unified data management, UDM), may store all data related to a user in the network, including a user identity, authentication data, service data, location information, and the like, and provide functions, for example, user data management.

In a scenario in which a new user data management device replaces an old user data management device, user data stored in a user data management device in a live network, namely, the old user data management device, needs to be migrated to the new user data management device, and the user is driven to go offline. When the user re-registers, the user may register with the new user data management device, and subsequently, user data generated by the user may be stored in the new user data management device. Currently, how to drive the user to go offline becomes a problem that needs to be urgently resolved.

### SUMMARY

This application provides a user offline method and a user offline apparatus, to help drive a user to go offline.

According to a first aspect, a user offline method is provided, and may be applied to a first user data management device. The method includes: determining a target user, where user data of the target user is to be migrated from a second user data management device to the first user data management device; and sending first information to a first network element accessed by the target user, where the first information indicates the first network element to drive the target user to go offline.

In a scenario in which the first user data management device replaces the second user data management device, the user data needs to be migrated from the second user data management device to the first user data management device. The first user data management device may also be referred to as a new user data management device, and the second user data management device may also be referred to as an old user data management device, a user data management device in a live network, or a user data management device on which cutover is performed. This is not limited in this application. The first user data management device may be an HSS or a UDM, and the second user data management device may be an HSS or a UDM. In an actual application scenario, most of first user data management devices are UDMs, and most of second user data management devices are HSSs or UDMs.

The target user is a part or all of users stored in the second user data management device. Whether the target user is a part or all of users stored in the second user data management device may depend on an actual requirement. In an actual application scenario, if the requirement is to migrate a part of users, the target user is the part of users stored in the second user data management device. In an actual application scenario, if the requirement is to migrate all of users, the target user is all of users stored in the second user data management device. An operator may export, based on the requirement in the actual application scenario, the part or all of users stored in the second user data management device from the second user data management device, and import the part or all of users into the first user data management device. In this case, the first user data management device may determine the target user.

If the target user is a 4th generation mobile communication technology (4th generation, 4G) user, the first network element may be a mobility management entity (mobility management entity, MME). If the target user is a 5th generation mobile communication technology (5th generation, 5G) user, the first network element may be an access and mobility management (access and mobility management, AMF). The first user data management device may determine a user type of the target user based on the user data of the target user, and determine the first network element based on the user type.

The first network element may drive, based on the first information that indicates to drive the target user to go offline, the target user to go offline.

According to the user offline method provided in this application, the first user data management device sends the first information to the first network element to indicate the first network element to drive the target user to go offline, which reduces dependence on the second user data management device and helps increase a probability of successfully driving the user to go offline. In addition, in this application, the target user may be determined based on the requirement, and the target user may be driven to go offline. Therefore, flexibility is higher.

With reference to the first aspect, in some implementations of the first aspect, before the sending first information to a first network element accessed by the target user, the method further includes: receiving second information from the second user management device, where the second information includes location information of the target user; and the first information indicates the first network element to drive the target user located at the location information.

Before sending the first information, the first user management device may determine the location information of the target user, and then indicate, based on the first information, the first network element to drive the target user located at the location information. The location information of the target user may be sent by the second user management device to the first user management device based on the second information.

According to the user offline method provided in this application, the first user management device may indicate, based on the first information, the first network element to drive the target user, and determine the location information of the target user. This helps the first network element accurately drive the target user to go offline, and helps increase a probability of successfully driving the user to go offline.

With reference to the first aspect, in some implementations of the first aspect, before the receiving second information from the second user management device, the method further includes: sending third information to the second user data management device, where the third information is for requesting the location information of the target user.

After determining the target user, the first user management device may send the third information to the second user data management device to obtain the location information of the target user. The first user management device receives the second information from the second user management device to obtain the location information of the target user, and may send the first information to the first network element to indicate the first network element to drive the target user based on the location information.

According to the user offline method provided in this application, after determining the target user, the first user management device may automatically obtain the location information of the target user, and automatically send the first information to the first network element to indicate the first network element to drive the target user based on the location information. This does not need human intervention, and helps improve processing efficiency.

With reference to the first aspect, in some implementations of the first aspect, the first user data management device includes a first module and a second module; and the sending first information to a first network element accessed by the target user includes: The first module sends first indication information to the second module, where the first indication information indicates the second module to drive the target user to go offline; and the second module sends the first information to the first network element based on the first indication information.

The first module in the first user data management device may also be referred to as a provisioning service provisioning gateway (Provisioning GW), and may receive a subscription service and maintenance instructions from provisioning system or a maintenance console. After determining the target user, the first module may send the first indication information to the second module, where the first indication information indicates the second module to drive the target user to go offline. The second module may determine the first information based on the first indication information, and send the first information to the first network element.

In this implementation, the first user data management device includes the first module and the second module, the first module is configured to: determine the target user and indicate the second module to send the first information, and the second module is configured to send the first information. This helps drive the target user to go offline.

With reference to the first aspect, in some implementations of the first aspect, the first indication information further indicates the second module to send third information; and the method further includes: The second module sends the third information to the second user data management device based on the first indication information.

The first indication information may further indicate to obtain the location information of the target user, that is, further indicates the second module to send the third information. The second module may further send the third information to the second user data management device based on the first indication information.

In this implementation, the second module may send the first information and the third information based on the first indication information, to obtain the location information of the target user and drive the target user to go offline, which helps accurately drive the target user to go offline.

With reference to the first aspect, in some implementations of the first aspect, the third information is carried in a user data request (user data request, UDR) message, and the second information is carried in a user data answer (user data answer, UDA) message.

In a scenario such as VoLTE domain selection or an intelligent service in the live network, an application server (application server, AS) obtains the location information of the user from the UDM or the HSS based on the UDR message, and performs domain selection or other intelligent service control based on the location information. If the target user is a 4G user, in this application, the 4G user is driven to go offline. Based on such a procedure, the AS is simulated to obtain location information of the 4G user based on the UDR message and the UDA message.

In this implementation, the location information of the 4G user is obtained based on the UDR message and the UDA message, and a message specified in an existing protocol is reused, so that no additional message needs to be formulated, which is simple and convenient.

With reference to the first aspect, in some implementations of the first aspect, the third information is carried in a location service routing information request (routing information request, RIR) message, and the second information is carried in a location service routing answer (routing information answer, RIA) message.

If the target user is a 4G user, the first user data management device may obtain location information of the 4G user based on the RIR message and the RIA message.

In this implementation, the location information of the 4G user is obtained based on the RIR message and the RIA message, and a message specified in an existing protocol is reused, so that no additional message needs to be formulated, which is simple and convenient.

With reference to the first aspect, in some implementations of the first aspect, the first information is carried in a cancel location request (cancel location request, CLR) message.

In this implementation, the target user is driven, based on the CLR message, to go offline, and a message specified in an existing protocol is reused, so that no additional message needs to be formulated, which is simple and convenient. In addition, the location information of the target user is obtained based on the UDR message and the UDA message, or based on the RIR message and the RIA message, and the target user is driven, based on the CLR message, to go offline. A plurality of single procedures in the protocol are combined (where the single procedures, namely, the UDR message and the UDA message, the RIR message and the RIA message, and the CLR message are combined into a plurality of single procedures, that is, the UDR message, the UDA message, and the CLR message, or the RIR message, the RIA message, and the CLR message) to drive the target user to go offline, and there is no need to depend too much on the second user data management device. This helps drive the target user to go offline.

With reference to the first aspect, in some implementations of the first aspect, the third information is carried in a "GET:nudm-uecm/registrations/amf-3gpp-access" message.

The "GET:nudm-uecm/registrations/amf-3gpp-access" message may also be referred to as "GET: AMF Data" for short. This is not limited in this application. The third information is carried in the "GET:nudm-uecm/registrations/amf-3gpp-access" message. In other words, if the target user is a 5G user, the first user data management device may transmit the third information based on the "GET:nudm-uecm/registrations/amf-3gpp-access" protocol message, to request location information of the 5G user.

In this implementation, the location information of the 5G user is obtained based on the "GET:nudm-uecm/registrations/amf-3gpp-access" protocol message, and a framework specified in an existing protocol is reused, which is simple and convenient.

With reference to the first aspect, in some implementations of the first aspect, the first information is carried in a "POST {DeregCallbackUri}(DeregistrationData)" message.

The "POST {DeregCallbackUri}(DeregistrationData)" message may also be referred to as "POST: Deregistration" for short. This is not limited in this application.

The first information is carried in the "POST {DeregCallbackUri}(DeregistrationData)" message. In other words, if the target user is a 5G user, the first user data management device may transmit the first information based on the "POST {DeregCallbackUri} (DeregistrationData)" protocol message, to drive the 5G user to go offline.

In this implementation, the 5G user is driven, based on the "POST {DeregCallbackUri}(DeregistrationData)" protocol message, to go offline, and a framework specified in an existing protocol is reused, which is simple and convenient. In addition, the location information of the target user is obtained based on the "GET:nudm-uecm/registrations/amf-3gpp-access" protocol message, and the target user is driven, based on the "POST {DeregCallbackUri}(DeregistrationData)" protocol message, to go offline. A plurality of single procedures in the protocol (the single procedure "GET:nudm-uecm/registrations/amf-3gpp-access" protocol message and the single procedure "POST {DeregCallbackUri}(DeregistrationData)" protocol message) are combined to drive the target user to go offline, and there is no need to depend too much on the second user data management device. This helps drive the target user to go offline.

With reference to the first aspect, in some implementations of the first aspect, the sending first information to a first network element includes: sending the first information to a routing agent node (diameter routing agent, DRA) or a service communication proxy (service communication proxy, SCP), where the DRA or the SCP is configured to send the first information to the first network element.

The first user data management device may not need to determine whether a communication system includes the DRA or the SCP. A developer may preset data configuration on the first user data management device. If the first user data management device needs to send the first information via the DRA or the SCP, the first user data management device sends the first information to the DRA or the SCP. The DRA or the SCP receives the first information, and may forward the first information to the first network element.

In this implementation, the DRA or the SCP forwards the first information to the first network element. This helps the DRA or the SCP function in networking, and the first information may be transmitted to the first network element more simply.

According to a second aspect, a user offline apparatus is provided. The method includes: a processing unit, configured to determine a target user, where user data of the target user is to be migrated from a second user data management device to a first user data management device; and a transceiver unit, configured to send first information to a first network element accessed by the target user, where the first information indicates the first network element to drive the target user to go offline.

With reference to the second aspect, in some implementations of the second aspect, the transceiver unit is further configured to receive second information from the second user management device, where the second information includes location information of the target user; and the first information indicates the first network element to drive the target user located at the location information.

With reference to the second aspect, in some implementations of the second aspect, the transceiver unit is further configured to send third information to the second user data management device, where the third information is for requesting the location information of the target user.

With reference to the second aspect, in some implementations of the second aspect, the third information is carried in a user data request UDR message, and the second information is carried in a user data answer UDA message.

With reference to the second aspect, in some implementations of the second aspect, the third information is carried in a location service routing information request RIR message, and the second information is carried in a location service routing answer RIA message.

With reference to the second aspect, in some implementations of the second aspect, the first information is carried in a cancel location request CLR message.

With reference to the second aspect, in some implementations of the second aspect, the third information is carried in a "GET:nudm-uecm/registrations/amf-3gpp-access" message.

With reference to the second aspect, in some implementations of the second aspect, the first information is carried in a "POST {DeregCallbackUri}(DeregistrationData)" message.

With reference to the second aspect, in some implementations of the second aspect, the transceiver unit is further configured to send the first information to a routing agent node DRA or a service communication proxy SCP, where the DRA or the SCP is configured to send the first information to the first network element.

According to a third aspect, a user offline apparatus is provided, and includes a processor, where the processor is configured to perform the method in any one of the first aspect and possible implementations of the first aspect.

The apparatus may further include a memory configured to store instructions and data. The memory is coupled to the processor. When the processor executes the instructions stored in the memory, the method described in the foregoing aspects may be implemented. The apparatus may further include a communication interface. The communication interface is used by the apparatus to communicate with another device. For example, the communication interface may be a transceiver, a circuit, a bus, a module, or another type of communication interface.

According to a fourth aspect, a user offline apparatus is provided, and includes a processor, where the processor is coupled to a memory, and the memory is configured to store instructions; and when the processor invokes the instructions, the apparatus is caused to perform the method in any one of the first aspect and possible implementations of the first aspect.

According to a fifth aspect, a chip system is provided, and includes a processor configured to invoke instructions from a memory and run the instructions, so that the chip system is caused to perform the method in any one of the first aspect and possible implementations of the first aspect.

According to a sixth aspect, a computer-readable storage medium is provided. The computer-readable storage medium stores a computer program (which may also be referred to as code or instructions). When the computer program runs on a computer, the computer is caused to perform the method in any one of the first aspect and possible implementations of the first aspect.

According to a seventh aspect, a computer program product is provided. The computer program product includes a computer program (which may also be referred to as code or instructions). When the computer program runs, a computer is caused to perform the method in any one of the first aspect and possible implementations of the first aspect.

For technical effects that may be achieved by any one of the second aspect to the seventh aspect and any one of possible designs of any one of the second aspect to the seventh aspect, refer to descriptions of technical effects that can be brought by the first aspect. Details are not described herein again.

### BRIEF DESCRIPTION OF DRAWINGS

FIG. 1 is a networking diagram of a UDM;
FIG. 2 is a diagram of user data migration;
FIG. 3 is a diagram of a method for driving a user to go offline;
FIG. 4 is a schematic flowchart of a user offline method according to an embodiment of this application;
FIG. 5 is a schematic flowchart of a 4G user offline method according to an embodiment of this application;
FIG. 6 is a schematic flowchart of a 5G user offline method according to an embodiment of this application;
FIG. 7 is a schematic flowchart of another 4G user offline method according to an embodiment of this application;
FIG. 8 is a schematic flowchart of another 5G user offline method according to an embodiment of this application;
FIG. 9 is a block diagram of a user offline apparatus according to an embodiment of this application; and
FIG. 10 is a block diagram of another user offline apparatus according to an embodiment of this application.

### DESCRIPTION OF EMBODIMENTS

The following describes technical solutions of this application with reference to accompanying drawings.

In a mobile communication network, a user data management device, such as a home subscriber server (home subscriber server, HSS) or a unified data management (unified data management, UDM), may store all data related to a user in the network, including a user identity, authentication data, service data, location information, and the like, and provide functions, for example, user data management.

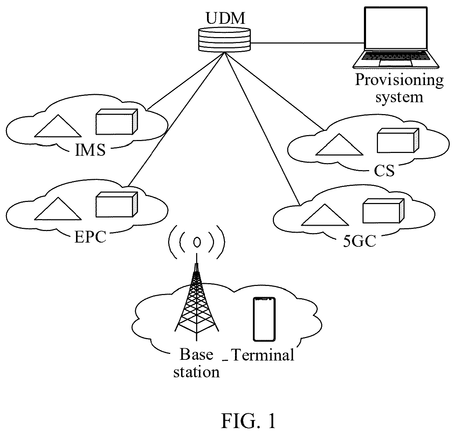

The HSS is a server configured to store subscription information of a user, is evolution and upgrade of a home location register (home location register, HLR) of a 2G network element and a 3G network element, and is mainly responsible for managing subscription data of the user and the location information of the mobile user. The UDM is configured to manage authentication data, service data, and the like of a 5th generation mobile communication technology (5th generation, 5G) user, may perform access authentication, registration management, and the like on the 5G user, and may further provide basic network functions such as mobility management, access authentication, and service authorization for a conventional 2G network user, 3G network user, 4G network user, and an Internet protocol multimedia system (internet protocol multimedia subsystem, IMS) network user. FIG. 1 is a networking diagram of a UDM. As shown in FIG. 1, the networking diagram of the UDM includes a provisioning system, a UDM, an IMS, a circuit switch (circuit switch, CS), a 4G packet core network (evolved packet core, EPC), a 5G core network (5G core, 5GC), a base station, and a terminal.

Functions and roles of peripheral network elements in the UDM networking are as follows:
The provisioning system mainly receives provisioning instructions from a service center and a customer relationship management (customer relationship management, CRM) system, where the instructions include providing services such as registration and deregistration, service provisioning (for example, international roaming provisioning), and service modification for the terminal.

IMS: An IMS network may include a call session control function (call session control function, CSCF), an AS, and the like, and may provide functions such as registration, call control, and routing for a voice over long term evolution (voice over long-term evolution, VoLTE) user.

The EPC includes an MME and the like, and may provide functions such as registration, mobility management, and session management for a 4G user.

The CS is a conventional circuit domain core network, may include a mobile switching center (mobile switching center, MSC) and the like, and may provide functions such as registration, mobility management, call control, and routing for a 2G user or a 3G user.

The 5GC may include an AMF, a session management function (session management function, SMF), and the like, and may provide functions such as registration, mobility management, and session management for a 5G user.

The base station may include a 2G base station, a 3G base station, a 4G base station, and a 5G base station, and may provide a wireless access function for the terminal.

In a scenario in which a new user data management device replaces an old user data management device, user data stored in a user data management device in a live network, namely, the old user data management device, needs to be migrated to the new user data management device, and a user is driven to go offline. When the user re-registers, the user may register with the new user data management device, and subsequently, user data generated by the user may be stored in the new user data management device.

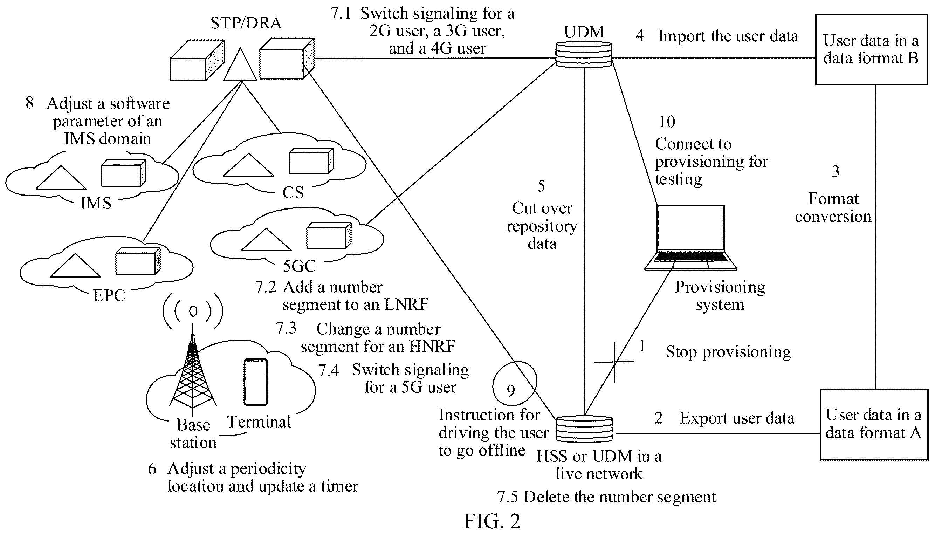

For example, when the new UDM replaces an HSS or a UDM in the live network, user data stored in the HSS or the UDM in the live network needs to be migrated to the new UDM, and the HSS or the UDM in the live network may drive the user to go offline. When the user re-registers, the user may register with the new UDM, and subsequently, user data generated by the user may be stored in the new UDM. FIG. 2 is a diagram of user data migration. As shown in FIG. 2, a networking diagram of an HSS or a UDM in a live network includes a provisioning system, the HSS or the UDM in the live network, a signaling transfer point (signaling transfer point, STP) or a DRA, an IMS, a CS, an EPC, a 5GC, a base station, and a terminal. When the new UDM replaces the HSS or the UDM in the live network, user data stored in the HSS or the UDM in the live network needs to be migrated to the new UDM. The User data migration may include the following steps:
(1) An operator stops provisioning. That is, communication between the HSS or the UDM in the live network and the provisioning system is disconnected. To be specific, the provisioning system cannot transmit new user data to the HSS or the UDM in the live network during user data migration.
(2) The operator exports the user data from the HSS or the UDM in the live network to obtain user data in a data format A. The operator may export, by using an export tool, the user data that needs to be migrated and that is stored in the HSS or the UDM in the live network. A format of the exported user data is a format preset by the HSS or the UDM in the live network. In this embodiment of this application, the data format A is used as an example for description.
(3) If a data format of the new UDM is different from the data format A, the operator may perform format conversion on the user data in the data format A. The operator may convert the user data in the data format A into user data in a data format B by using a data format conversion tool, where the data format B is the data format of the new UDM.
(4) The operator imports the user data in the data format B into the new UDM. The operator may import the user data in the data format B into the new UDM by using an import tool.

If a user data management device in the live network is the HSS, the user data in (2) to (4) is service data of a 2G user, a 3G user, and a 4G user. If a user data management device in the live network is the UDM, the user data in (2) to (4) is service data of a 2G user, a 3G user, a 4G user, and a 5G user. The service data is stored in the HSS or the UDM in a non-repository data manner, and may also be referred to as non-repository data.

(5) The operator indicates the new UDM to obtain or cut over repository data from the HSS or the UDM in the live network. The repository data may include data such as TAS data of an IMS user. The TAS data of the IMS user is stored in the HSS or the UDM in a repository data manner, and therefore, may be referred to as repository data.

In (2) to (5), migration of the service data of the user can be implemented. Migration may also be referred to as cutover. This is not limited in embodiments of this application. In (2) to (5), the user data does not include dynamic data of the user, but includes only static data of the user, where the dynamic data of the user includes frequently changing and unstable data, for example, location data of the user, and the static data of the user includes stable data, for example, the service data.
(6) The operator controls the base station to adjust a periodicity location and update a timer, to be specific, the operator controls the base station to reduce a periodicity, and updates duration of the timer to a reduced periodicity, so that the terminal can subsequently perform re-register at the reduced periodicity.
(7) The operator may perform the following operations:
   7.1: The operator controls the STP or the DRA to switch signaling for the 2G user, the 3G user, and the 4G user, to facilitate subsequent registration with the new UDM.
   7.2: The operator controls the 5GC to add a number segment to a local network repository function (local network repository function, LNRF).
   7.3: The operator controls the 5GC to add a number segment to a global network repository function (home network repository function, LNRF).
   7.4: The operator controls the 5GC to switch signaling for the 5G user, so that the 5G user subsequently registers with the new UDM.
   7.5: The operator controls the HSS or the UDM in the live network to delete a number segment.
(8) The operator controls the IMS to adjust a software parameter of an IMS domain.

Operations in (6) to (8) are mainly for configuring the parameter, so that the terminal may register with the new UDM during re-registration.
(9) The operator controls the HSS or the UDM in the live network to send, to the DRA, an instruction for driving the user to go offline. After receiving the instruction for driving the user to go offline, the DRA may indicate a corresponding network element to drive the user to go offline.
(10) The operator controls the new UDM to connect to the provisioning system, and tests the new UDM via the provisioning system, that is, test whether new user data generated by the provisioning system is stored in the new UDM.

In embodiments of this application, the foregoing step (9) is mainly studied, and is marked by a circle in FIG. 2. In the method shown in FIG. 2, for the 2G user, the 3G user, and the 4G user, the HSS or the UDM in the live network may send a reset (reset) message to a network element accessed by the user, to drive the user to go offline.

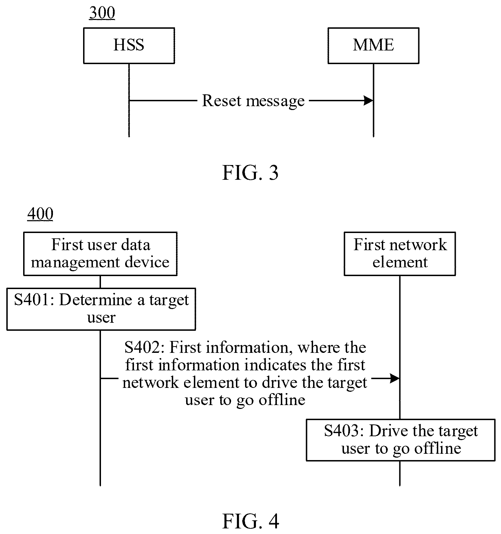

For example, the user data management device in the live network is an HSS, and the network element accessed by the user is an MME. FIG. 3 is a diagram of a method for driving a user to go offline. As shown in FIG. 3, the HSS may send a reset message to the MME, where reset information indicates the MME to drive the user to go offline. The MME receives the reset message, and drives the user to go offline based on the reset message.

In this implementation, the HSS or the UDM in the live network sends the reset message to drive the user to go offline. If such a function is not preset on the HSS or the UDM in the live network, the user cannot be successfully driven to go offline. In addition, the reset message includes an international mobile subscriber identity (international mobile subscriber identity, IMSI) or an IMSI prefix. However, not all network elements accessed by the user can identify the IMSI or the IMSI prefix. If the network element accessed by the user cannot identify the IMSI or the IMSI prefix in the reset message, the user cannot be driven to go offline. Consequently, the user fails to go offline. In addition, when the HSS or the UDM in the live network sends the reset message, the reset message cannot be sent to network elements accessed by a part of users, but can only be sent to network elements accessed by all of the users. For example, batch cutover by number cannot be implemented for the China region. Consequently, flexibility is poor. In a CS fallback (CS Fallback, CSFB) scenario and a VoLTE scenario, the MME drives the user to go offline based on the reset message, resulting in a high failure rate and easily causing a CSFB user and a VoLTE user to fail to normally register with the new UDM.

For 5G, the UDM in the live network does not have a proper method for driving the user to go offline.

In view of this, embodiments of this application provide a user offline method and a user offline apparatus. A new user data management device drives various types of users to go offline, which reduces dependence on an old user data management device and helps increase a probability of successfully driving the user to go offline.

FIG. 4 is a schematic flowchart of a user offline method 400 according to an embodiment of this application. The method 400 may be applied to the communication system shown in FIG. 2. As shown in FIG. 4, the method 400 may include the following steps.

S401: A first user data management device determines a target user, where user data of the target user is to be migrated from a second user data management device to the first user data management device.

In a scenario in which the first user data management device replaces the second user data management device, the user data needs to be migrated from the second user data management device to the first user data management device. The first user data management device may also be referred to as a new user data management device, and the second user data management device may also be referred to as an old user data management device, a user data management device in a live network, or a user data management device on which cutover is performed. This is not limited in embodiments of this application. The first user data management device may be an HSS or a UDM, and the second user data management device may be an HSS or a UDM. In an actual application scenario, most of first user data management devices are UDMs, and most of second user data management devices are HSSs or UDMs.

The target user is a part or all of users stored in the second user data management device. Whether the target user is a part or all of users stored in the second user data management device may depend on an actual requirement. In an actual application scenario, if the requirement is to migrate a part of users, the target user is the part of users stored in the second user data management device. In an actual application scenario, if the requirement is to migrate all of users, the target user is all of users stored in the second user data management device. An operator may export, based on the requirement in the actual application scenario, the part or all of users stored in the second user data management device from the second user data management device, and import the part or all of users into the first user data management device. In this case, the first user data management device may determine the target user.

For example, in the example shown in FIG. 2, the first user data management device is the new UDM, and the second user data management device is the HSS or the UDM in the live network. If the requirement is to migrate the part of users, the target user is a part of users stored in the HSS or the UDM in the live network. An operator may export, by using an export tool, the part of users stored in the HSS or the UDM in the live network from the HSS or the UDM in the live network, perform format conversion by using a data format conversion tool, that is, convert a data format A of the exported data into a data format B, and import user data in the data format B to the new UDM by using an import tool. In this case, the new UDM may determine the target user.

S402: The first user data management device sends first information to a first network element accessed by the target user, where the first information indicates the first network element to drive the target user to go offline; and correspondingly, the first network element receives the first information.

If the target user is a 4G user, the first network element may be an MME. If the target user is a 5G user, the first network element may be an AMF. The first user data management device may determine a user type of the target user based on the user data of the target user, and determine the first network element based on the user type.

For example, if the first user data management device determines, based on the user data of the target user, that the user type of the target user includes the 4G user and the 5G user, the first user data management device may determine that the first network element includes the MME and the AMF. In other words, for the 4G user, the first user data management device sends the first information to the MME; and for the 5G user, the first user data management device sends the first information to the AMF.

S403: The first network element drives, based on the first information, the target user to go offline.

The first network element may drive, based on the first information that indicates to drive the target user to go offline, the target user to go offline.

According to the user offline method provided in this embodiment of this application, the first user data management device sends the first information to the first network element to indicate the first network element to drive the target user to go offline, which reduces dependence on the second user data management device and helps increase a probability of successfully driving the user to go offline. In addition, in this embodiment of this application, the target user may be determined based on the requirement, and the target user may be driven to go offline. Therefore, flexibility is higher.

In an optional embodiment, before the sending first information to a first network element accessed by the target user in S402, the method 400 may further include: The second user management device sends second information to the first user management device, where the second information includes location information of the target user; and correspondingly, the first user management device may receive the second information. In this case, the first information may indicate the first network element to drive the target user located at the location information.

Before sending the first information, the first user management device may determine the location information of the target user, and then indicate, based on the first information, the first network element to drive the target user located at the location information. The location information of the target user may be sent by the second user management device to the first user management device based on the second information. The second user management device may send the second information to the first user management device based on the following indication:
The first user management device sends a request message for obtaining the location information of the target user to the second user management device, and the second user management device may send the second information to the first user management device based on the request message. Alternatively,
the second user management device sends the second information to the first user management device based on indication information of the operator, where the indication information indicates the second user management device to send the location information of the target user to the first user management device.

According to the user offline method provided in this embodiment of this application, the first user management device may indicate, based on the first information, the first network element to drive the target user, and determine the location information of the target user. This helps the first network element accurately drive the target user to go offline, and helps increase a probability of successfully driving the user to go offline.

Optionally, before the first user management device receives the second information from the second user management device, the method further includes: The first user management device sends third information to the second user data management device, where the third information is for requesting the location information of the target user; and correspondingly, the second user data management device receives the third information. The second user data management device may send the second information to the first user management device based on the third information.

After determining the target user, the first user management device may send the third information to the second user data management device to obtain the location information of the target user. The first user management device receives the second information from the second user management device to obtain the location information of the target user, and may send the first information to the first network element to indicate the first network element to drive the target user based on the location information.

According to the user offline method provided in this embodiment of this application, after determining the target user, the first user management device may automatically obtain the location information of the target user, and automatically send the first information to the first network element to indicate the first network element to drive the target user based on the location information. This does not need human intervention, and helps improve processing efficiency.

If the target user is the 4G user, the third information may be carried in a UDR message, and the second information is carried in a UDA message. Alternatively, the third information may be carried in a location service (location service, LCS) routing information request RIR message, and the second information may be carried in a location service routing answer RIA message. In both implementations, the first information may be carried in a cancel location request CLR message.

The method provided in this embodiment of this application is described by using an example in which the target user is the 4G user, the first network element is the MME, the first user management device is the new UDM, the second user management device is an HSS on which cutover is performed, the third information is carried in the UDR message, the second information is carried in the UDA message, and the first information is carried in the CLR message.

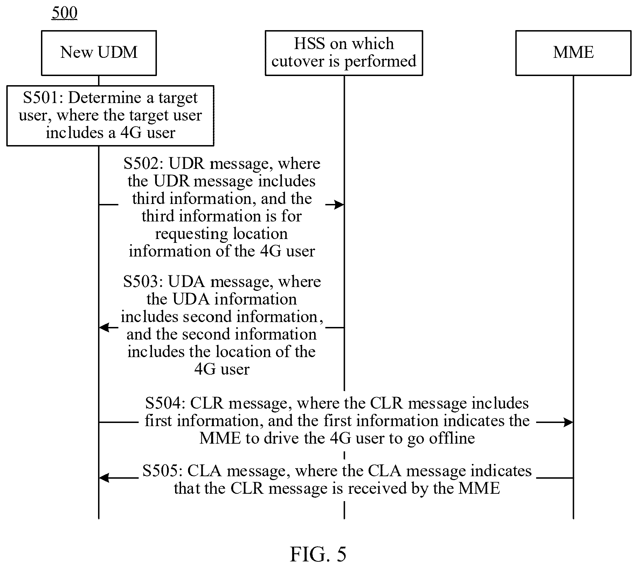

In a scenario such as VoLTE domain selection or an intelligent service in the live network, an AS obtains the location information of the user from the UDM or the HSS via the UDR message that carries a data parameter (Data-Reference) AVP whose value is the location information (Location Information), and performs domain selection or other intelligent service control based on the location information. In this application, the 4G user is driven to go offline. Based on such a procedure, the new UDM simulates the AS to obtain, based on the UDR message and the UDA message, location information of the 4G user from the HSS on which cutover is performed. FIG. 5 is a schematic flowchart of a 4G user offline method 500. As shown in FIG. 5, the method 500 may include the following steps.

S501: A new UDM determines a target user, where the target user includes a 4G user.

S502: The new UDM sends a UDR message to an HSS on which cutover is performed, where the UDR message includes third information, and the third information is for requesting location information of the 4G user; and correspondingly, the HSS on which cutover is performed receives the UDR message.

The new UDM may request, based on the UDR message, the location information of the 4G user from the HSS on which cutover is performed.

For example, the new UDM may encapsulate a UDR Diameter message, and send, through a direct Diameter link, an encapsulated UDR Diameter message to the HSS on which cutover is performed; and correspondingly, the HSS on which cutover is performed may receive the UDR Diameter message through the direct Diameter link.

S503: The HSS on which cutover is performed sends a UDA message to the new UDM based on the UDR message, where the UDA message includes second information, and the second information includes the location information of the 4G user; and correspondingly, the new UDM receives the UDA message.

The HSS on which cutover is performed sends the UDA message to the new UDM based on the UDR message, where the UDA message includes the location information of the 4G user on an MME. The new UDM receives the UDA message, and may obtain, through parsing, a host name of the MME from the location information that is of the 4G user on the MME and that is included in the UDA message.

S504: The new UDM sends a CLR message to the MME based on the UDA message, where the CLR message includes first information, and the first information indicates the MME to drive the 4G user to go offline; and correspondingly, the MME receives the CLR message.

The new UDM may determine a domain name of the MME based on the host name of the MME and a first correspondence, where the first correspondence includes a one-to-one correspondence between a plurality of host names and a plurality of domain names. The new UDM may construct the CLR message based on the host name of the MME and the domain name of the MME. The new UDM may send the CLR message to the MME to drive the 4G user to go offline. The first correspondence may be represented in a form of a mapping table, a matrix, or an array. This is not limited in this embodiment of this application.

The CLR message indicates the MME to drive the 4G user located at the location information to go offline, which may also be referred to as that the CLR message indicates the MME to clear a session context cached by the 4G user. This is not limited in embodiments of this application. The CLR message may carry "Cancellation-Type:MME_UPDATE_PROCEDURE (0)" to indicate the MME to clear the session context cached by the 4G user.

S505: The MME sends a cancel location answer (cancel location answer, CLA) message to the new UDM based on the CLR message, where the CLA message indicates that the CLR message is received by the MME.

Based on the CLR message, the MME may clear the session context cached by the 4G user, so that the 4G user can quickly register with the new UDM in a subsequent procedure such as service request (service request, SR) or periodic tracking area update (tracking area update, TAU).

Based on the CLR message, the MME may send the CLA message to the new UDM to indicate that the CLR message is received.

In this implementation, the new UDM simulates an AS to obtain, based on the UDR message and the UDA message, the location information of the 4G user from the HSS on which cutover is performed, and drives, based on the location information of the 4G user and the CLR message, the 4G user to go offline. A message specified in an existing protocol is reused, so that no additional message needs to be formulated, which is simple and convenient.

If the target user is a 5G user, the first information in the method 400 may be carried in a deregistration message.

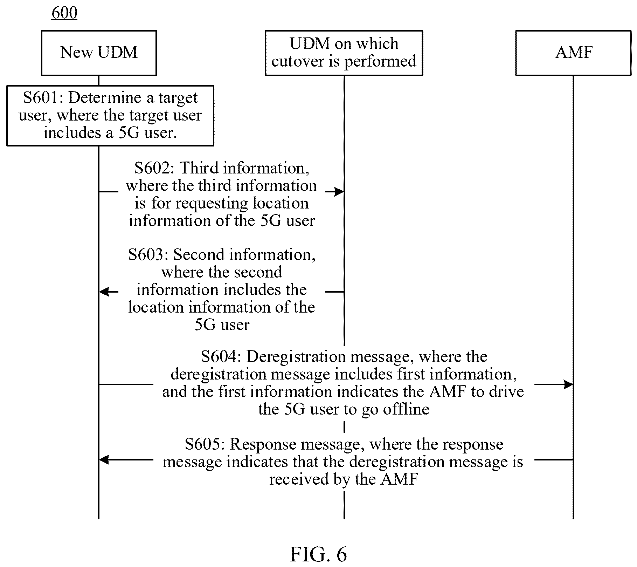

For example, the target user is the 5G user, the first network element is an AMF, the first user management device is the new UDM, the second user management device is a UDM on which cutover is performed, and the first information is carried in the deregistration message. The new UDM may be used as a consumer in a network function (network function, NF) to obtain location information of the 5G user from the UDM on which cutover is performed. FIG. 6 is a schematic flowchart of a 5G user offline method 600. As shown in FIG. 6, the method 600 may include the following steps.

S601: A new UDM determines a target user, where the target user includes a 5G user.

S602: The new UDM sends third information to a UDM on which cutover is performed, where the third information is for requesting location information of the 5G user; and correspondingly, the UDM on which cutover is performed receives the third information.

The new UDM may carry the third information in a "GET:nudm-uecm/registrations/amf-3gpp-access" message and obtain, based on the "GET:nudm-ueem/registrations/amf-3gpp-access" message, the location information of the 5G user from the UDM on which cutover is performed. The "GET:nudm-uecm/registrations/amf-3gpp-access" message may be referred to as an AMF data message. However, this is not limited in embodiments of this application.

S603: The UDM on which cutover is performed sends second information to the new UDM based on the third information, where the second information includes the location information of the 5G user; and correspondingly, the new UDM receives the second information.

The UDM on which cutover is performed may send the second information to the new UDM based on the third information, where the second information may include the location information of the 5G user on an AMF. The location information of the 5G user on the AMF may include information such as an AMF callback (Callback) uniform resource identifier (uniform resource identifier, URI), and an AMF instance identifier (amflnstanceId).

S604: The new UDM sends a deregistration message to the AMF based on the second information, where the deregistration message includes first information, and the first information indicates the AMF to drive the 5G user to go offline; and correspondingly, the AMF receives the deregistration message.

The new UDM may obtain, through parsing, the AMF callback URI from the location information that is of the 5G user on the AMF and that is included in the second information, and construct the deregistration message based on the AMF callback URI. The deregistration message indicates the AMF to drive the 5G user to go offline. The deregistration message indicates the AMF to drive the 5G user to go offline, which may also be referred to as that the deregistration message indicates the AMF to clear a session context cached by the 5G user. This is not limited in embodiments of this application. The deregistration message may be a "POST {DeregCallbackUri}(DeregistrationData)" message. However, this is not limited in embodiments of this application. The new UDM may encapsulate the "POST {DeregCallbackUri}(DeregistrationData)" message and send an encapsulated "POST{DeregCallbackUri}(DeregistrationData)" message to the AMF. The "POST{DeregCallbackUri}(DeregistrationData)" message may carry "UE_REGISTRATION_AREA_CHANGE" to indicate the AMF to clear the session context cached by the 5G user.

S605: The AMF sends a response message to the new UDM based on the deregistration message, where the response message indicates that the deregistration message is received by the AMF.

The AMF clears the session context cached by the user, so that the user/a terminal can quickly register with the new UDM in a subsequent procedure such as SR/periodic registration.

Based on the deregistration message, the AMF may clear the session context cached by the 5G user, so that the 5G user can quickly register with the new UDM in a subsequent procedure such as SR or periodic TAU.

Based on the deregistration message, the AMF may send the response message to the new UDM to indicate that the deregistration message is received.

In this implementation, the new UDM is used as an NF consumer to obtain, based on the third information, the location information of the 5G user from the UDM on which cutover is performed, and drives, based on the location information of the 5G user and the deregistration message, the 5G user to go offline. This helps drive the 5G user to go offline.

In an optional embodiment, if an application scenario includes a DRA or an SCP, in the foregoing method 400, sending the first information to the first network element in S402 may include: sending the first information to the DRA or the SCP, where the DRA or the SCP is configured to send the first information to the first network element.

The DRA is a 4G message forwarding agent, and the SCP is a 5G message forwarding agent. If the application scenario includes the DRA or the SCP, a first user data management device may first send the first information to the DRA or the SCP, and then the DRA or the SCP forwards the first information to the first network element.

The first user data management device may not need to determine whether a communication system includes the DRA or the SCP. A developer may perform preset on the first user data management device. If the first user data management device needs to send the first information via the DRA or the SCP, the first user data management device sends the first information to the DRA or the SCP. The DRA or the SCP receives the first information, and may forward the first information to the first network element.

In this implementation, the DRA or the SCP forwards the first information to the first network element. This helps the DRA or the SCP function in networking, and the first information may be transmitted to the first network element more simply.

In an optional embodiment, the first user data management device in the method 400 may include a first module and a second module. The sending first information to a first network element accessed by the target user in S402 includes: The first module sends first indication information to the second module, where the first indication information indicates the second module to drive the target user to go offline; and the second module sends the first information to the first network element based on the first indication information.

The first module in the first user data management device may also be referred to as a provisioning service provisioning gateway (Provisioning GW), and may receive a subscription service and maintenance instructions from provisioning or a maintenance console. After determining the target user, the first module may send the first indication information to the second module, where the first indication information indicates the second module to drive the target user to go offline. The second module may determine the first information based on the first indication information, and send the first information to the first network element.

For example, the first indication information may be carried in an SND CANCELC instruction, where the SND CANCELC instruction is an instruction used for clearing user location information or an instruction used for driving a user to go offline.

In this implementation, the first user data management device includes the first module and the second module, the first module is configured to: determine the target user and indicate the second module to send the first information, and the second module is configured to send the first information. This helps drive the target user to go offline.

Optionally, the first indication information further indicates the second module to send third information; and the method further includes: The second module sends the third information to a second user data management device based on the first indication information.

The first indication information may further indicate to obtain location information of the target user, that is, further indicates the second module to send the third information. The second module may further send the third information to the second user data management device based on the first indication information.

For example, the first indication information may be carried in the SND CANCELC instruction, and a parameter or an identifier may be added to the SND CANCELC instruction to indicate the second module to send the third information.

In this implementation, the second module may send the first information and the third information based on the first indication information, to obtain the location information of the target user and drive the target user to go offline, which helps accurately drive the target user to go offline.

To better understand the module in the first user data management device involved in this embodiment of this application, this embodiment of this application provides an example for description.

For example, the first user data management device includes the first module and the second module. The first module may be referred to as a provisioning service provisioning gateway, and the second module may include a database module, a call control unit (call control unit, CCU) service processing module, a UDM service processing module, a Diameter protocol processing module, and a hypertext transfer protocol (hypertext transfer protocol, HTTP) protocol processing module. The database module is configured to store service data of a user. The CCU service processing module is configured to process service logic of a 2G user, a 3G user, and a 4G user. In this embodiment of this application, the CCU service processing module may be configured to simulate an AS to obtain location information of the 4G user based on a UDR message and a UDA message. The UDM service processing module is configured to process service logic of the 5G user. In embodiments of this application, the UDM service processing module may be used as an NF consumer to obtain the location information of the 5G user based on the third information. The Diameter protocol processing module is configured to encapsulate a Diameter message and message routing. The HTTP protocol processing module is configured to encapsulate an HTTP message and message routing.

If the target user is the 4G user, the first user management device is the new UDM, the second user management device is an HSS on which cutover is performed, and a communication scenario includes the DRA, the first network element is an MME. The third information is carried in the UDR message, the second information is carried in the UDA message, and the first information is carried in a CLR message. The new UDM may drive, via the provisioning service provisioning gateway, the database module, the CCU service processing module, and the Diameter protocol processing module, the user to go offline.

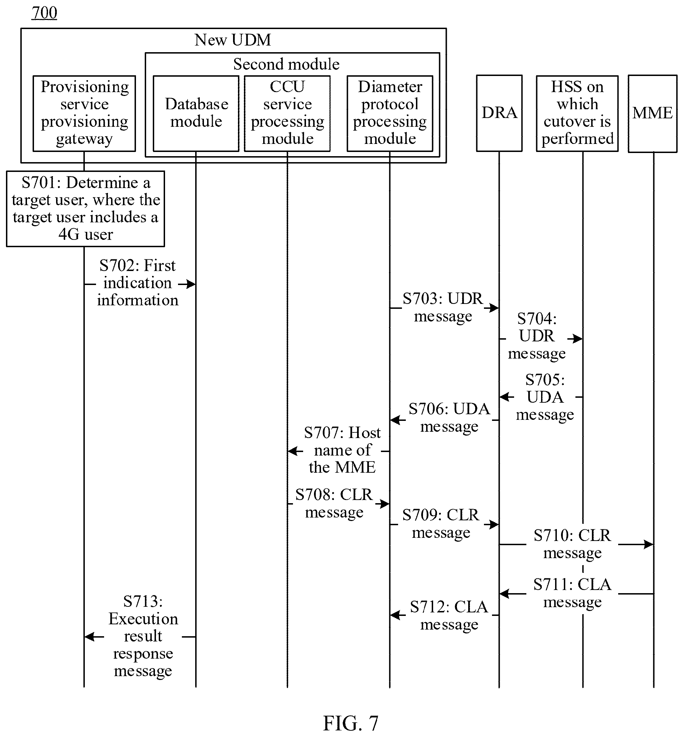

For example, FIG. 7 is a schematic flowchart of a 4G user offline method 700. As shown in FIG. 7, the method 700 may include the following steps.

S701: A provisioning service provisioning gateway in a new UDM determines a target user, where the target user includes a 4G user.

The target user may be imported to the provisioning service provisioning gateway in the new UDM by an operator using an import tool.

S702: The provisioning service provisioning gateway in the new UDM sends first indication information to a second module; and correspondingly, the second module receives the first indication information, where the first indication information indicates the second module to send third information and indicates the second module to drive the target user to go offline.

The first indication information may be carried in an SND CANCELC instruction. The provisioning service provisioning gateway in the new UDM sends the SND CANCELC instruction to the second module, where the SND CANCELC instruction indicates the second module to send the third information and indicates the second module to drive the target user to go offline.

S703: The second module sends a UDR message to a DRA based on the first indication information, where the UDR message includes the third information, and the third information is for requesting location information of the 4G user; and correspondingly, the DRA receives the UDR message.

The second module may send the UDR message to the DRA based on the first indication information, to obtain the location information of the 4G user, and then construct, based on the location information of the 4G user, indication information for driving the 4G user to go offline.

The second module includes a database module, a CCU service processing module, and a Diameter protocol processing module. The second module may send the UDR message to the DRA based on the first indication information. Information exchanged between the database module, the CCU service processing module, and the Diameter protocol processing module is an internal message of the second module. This is not limited in embodiments of this application. The second module may generate a UDR message for each user, and send UDR messages to the DRA.

For example, the new UDM may encapsulate a UDR Diameter message, and send an encapsulated UDR Diameter message to the DRA through a direct Diameter link; and correspondingly, the DRA may receive the UDR Diameter message through the direct Diameter link.

It may be understood that, if a communication scenario does not include the DRA, the second module may send, based on the first indication information, the UDR message to an HSS on which cutover is performed.

S704: The DRA sends, based on the UDR message, the UDR message to the HSS on which cutover is performed; and correspondingly, the HSS on which cutover is performed receives the UDR message.

S705: The HSS on which cutover is performed sends a UDA message to the DRA based on the UDR message, where the UDA message includes second information, and the second information includes the location information of the 4G user; and correspondingly, the DRA receives the UDA message.

The HSS on which cutover is performed sends the UDA message to the DRA based on the UDR message, where the UDA message includes the location information of the 4G user on an MME. The location information of the 4G user may include a host name of the MME.

S706: The DRA sends the UDA message to the new UDM based on the UDR message; and correspondingly, the Diameter protocol processing module in the new UDM receives the UDA message.

The Diameter protocol processing module in the new UDM receives the UDA message, and may obtain the host name of the MME from the UDA message through parsing and perform S707.

S707: The Diameter protocol processing module in the new UDM sends the host name of the MME to the CCU service processing module in the new UDM.

S708: The CCU service processing module in the new UDM constructs a CLR message based on the host name of the MME, and sends the CLR message to the Diameter protocol processing module in the new UDM, where the CLR message includes first information, and the first information indicates the MME to drive the 4G user to go offline.

The CCU service processing module may determine a domain name of the MME based on the host name of the MME and a first correspondence, where the first correspondence includes a one-to-one correspondence between a plurality of host names and a plurality of domain names. The new UDM may construct the CLR message based on the host name of the MME and the domain name of the MME. The new UDM may send the CLR message via the Diameter protocol processing module.

S709: The Diameter protocol processing module in the new UDM sends the CLR message to the DRA; and correspondingly, the DRA receives the CLR message.

S710: The DRA sends the CLR message to the MME based on the CLR message; and correspondingly, the MME receives the CLR message.

The CLR message indicates the MME to drive the 4G user to go offline, which may also be referred to as that the CLR message indicates the MME to clear a session context cached by the 4G user. This is not limited in embodiments of this application. The CLR message may carry "Cancellation-Type:MME_UPDATE_PROCEDURE (0)" to indicate the MME to clear the session context cached by the 4G user.

S711: The MME sends a CLA message to the DRA based on the CLR message; and correspondingly, the DRA receives the CLA message, where the CLA message indicates that the CLR message is received by the MME.

Based on the CLR message, the MME may clear the session context cached by the 4G user, so that the 4G user can quickly register with the new UDM in a subsequent procedure such as SR or periodic TAU.

Based on the CLR message, the MME may send the CLA message to the DRA to indicate that the CLR message is received.

S712: The DRA sends the CLA message to the new UDM based on the CLA message; and correspondingly, the second module in the new UDM receives the CLA message.

The second module may receive the CLA message via the Diameter protocol processing module.

S713: The second module in the new UDM determines an execution result based on the CLA message, and sends an execution result response message to the provisioning service provisioning gateway in the new UDM; and correspondingly, the provisioning service provisioning gateway receives the execution result response message.

If the CLA message includes an error code, this indicates that although the CLR message is successfully received, the 4G user is not successfully driven to go offline. The execution result may be that execution fails, and the execution result response message includes that the execution fails. The provisioning service provisioning gateway may determine, based on the execution result response message, that the 4G user is not successfully driven to go offline. If the CLA message does not include an error code, this indicates that the CLR message is successfully received, and the 4G user is also successfully driven to go offline. The execution result may be that execution succeeds, and the execution result response message includes that the execution succeeds. The provisioning service provisioning gateway may determine, based on the execution result response message, that the 4G user is successfully driven to go offline.

In this implementation, the new UDM sends the CLR message via the provisioning service provisioning gateway (namely, a first module) and the second module to drive the 4G user to go offline, which helps accurately drive the 4G user to go offline.

Optionally, if the execution result is that the execution fails, the second module in the new UDM may further write a related error reporting instruction into a log for the operator to download and view.

If the target user is a 5G user, a first user management device is the new UDM, and a second user management device is a UDM on which cutover is performed, assuming that a communication scenario does not include an SCP, a first network element is an AMF, and the first information is carried in a deregistration message. The new UDM may drive, via the provisioning service provisioning gateway, the database module, a UDM service processing module, and an HTTP protocol processing module, the user to go offline.

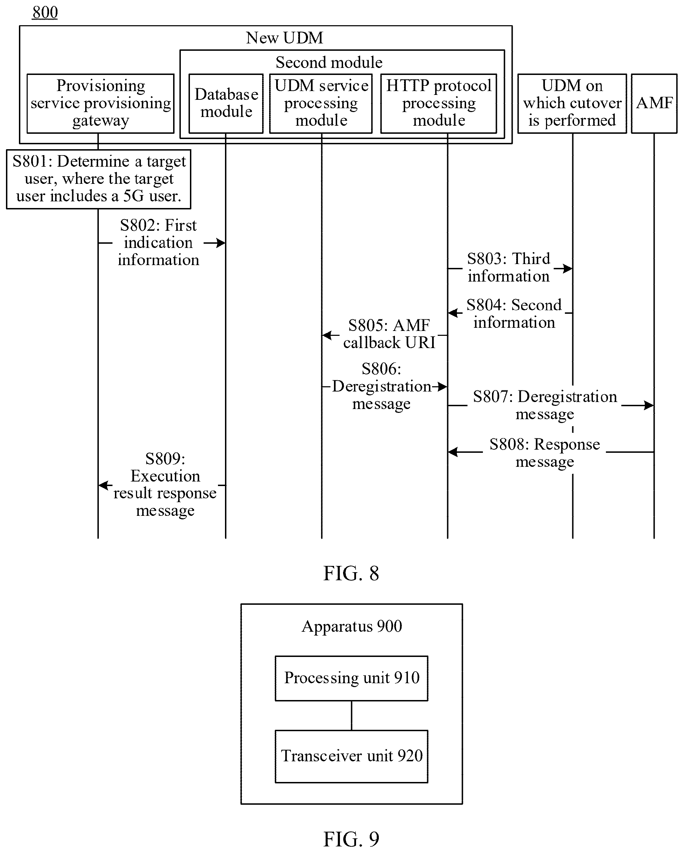

For example, FIG. 8 is a schematic flowchart of a 5G user offline method 800. As shown in FIG. 8, the method 800 may include the following steps.

S801: A provisioning service provisioning gateway in a new UDM determines a target user, where the target user includes a 5G user.

The target user may be imported to the provisioning service provisioning gateway in the new UDM by an operator using an import tool.

S802: The provisioning service provisioning gateway in the new UDM sends first indication information to a second module; and correspondingly, the second module receives the first indication information, where the first indication information indicates the second module to send third information and indicates the second module to drive the target user to go offline.

The first indication information may be carried in an SND CANCELC instruction. The provisioning service provisioning gateway in the new UDM sends the SND CANCELC instruction to the second module, where the SND CANCELC instruction indicates the second module to send the third information and indicates the second module to drive the target user to go offline.

S803: The second module sends, based on the first indication information, the third information to a UDM on which cutover is performed, where the third information is for requesting location information of the 5G user; and correspondingly, the UDM on which cutover is performed receives the third information.

The second module may send, based on the first indication information, the third information to the UDM on which cutover is performed, to obtain the location information of the 5G user on an AMF, and then construct, based on the location information of the 5G user on the AMF, indication information for driving the 5G user to go offline.

The second module includes a database module, a UDM service processing module, and an HTTP protocol processing module. The second module may send, based on the first indication information, the third information to the UDM on which cutover is performed. Information exchanged between the database module, the UDM service processing module, and the HTTP protocol processing module is an internal message of the second module. This is not limited in embodiments of this application. The second module may generate one piece of third information for each user, and send pieces of third information to the UDM on which cutover is performed.

For example, the third information may be carried in a "GET:nudm-uecm/registrations/amf-3gpp-access" message, and the second module may send, based on the first indication information, the "GET:nudm-uecm/registrations/amf-3gpp-access" message to the UDM on which cutover is performed, to obtain the location information of the 5G user.

S804: The UDM on which cutover is performed sends second information to the new UDM based on the third information, where the second information includes the location information of the 5G user; and correspondingly, the HTTP protocol processing module in the new UDM receives the second information.

The UDM on which cutover is performed sends the second information to the new UDM based on the third information, where the second information includes the location information of the 5G user. The location information of the 5G user includes an AMF callback URI. The new UDM may receive the second information via the HTTP protocol processing module, and may obtain the AMF callback URI from the second information through parsing and perform S805.

S805: The HTTP protocol processing module in the new UDM sends the AMF callback URI to the UDM service processing module in the new UDM.

S806: The UDM service processing module in the new UDM constructs a deregistration message based on the AMF callback URI, and sends the deregistration message to the HTTP protocol processing module in the new UDM, where the deregistration message includes first information, and the first information indicates the AMF to drive the 5G user to go offline.

The new UDM constructs the deregistration message based on the AMF callback URI in the second information, and the deregistration message indicates the AMF to drive the 5G user to go offline. The deregistration message indicates the AMF to drive the 5G user to go offline, which may also be referred to as that the deregistration message indicates the AMF to clear a session context cached by the 5G user. This is not limited in embodiments of this application. The deregistration message may be a "POST {DeregCallbackUri}(DeregistrationData)" message. However, this is not limited in embodiments of this application. The new UDM may encapsulate the "POST{DeregCallbackUri}(DeregistrationData)" message and send an encapsulated "POST{DeregCallbackUri}(DeregistrationData)" message to the AMF. The "POST{DeregCallbackUri}(DeregistrationData)" message may carry "UE_REGISTRATION_AREA_CHANGE" to indicate the AMF to clear the session context cached by the 5G user.

S807: The HTTP protocol processing module in the new UDM sends the deregistration message to the AMF; and correspondingly, the AMF receives the deregistration message.

S808: The AMF sends a response message to the new UDM based on the deregistration message; and correspondingly, the second module in the new UDM receives the response message.

Based on the response message, the AMF may clear the session context cached by the 5G user, so that the 5G user can quickly register with the new UDM in a subsequent procedure such as SR or periodic TAU.

Based on the deregistration message, the AMF may send the response message to the new UDM to indicate that the deregistration message is received. The second module in the new UDM may receive the response message via the HTTP protocol processing module.

S809: The second module in the new UDM determines an execution result based on the response message, and sends an execution result response message to the provisioning service provisioning gateway in the new UDM; and correspondingly, the provisioning service provisioning gateway receives the execution result response message.

If the response message includes an error code, this indicates that although the deregistration message is successfully received, the 5G user is not successfully driven to go offline. The execution result may be that execution fails, and the execution result response message includes that the execution fails. The provisioning service provisioning gateway may determine, based on the execution result response message, that the 5G user is not successfully driven to go offline. If the response message does not include an error code, this indicates that the deregistration message is successfully received, and the 5G user is also successfully driven to go offline. The execution result may be that execution succeeds, and the execution result response message includes that the execution succeeds. The provisioning service provisioning gateway may determine, based on the execution result response message, that the 5G user is successfully driven to go offline.

In this implementation, the new UDM sends the deregistration message via the provisioning service provisioning gateway (namely, a first module) and the second module to drive the 5G user to go offline, which helps accurately drive the 5G user to go offline.

Optionally, if the execution result is that the execution fails, the second module in the new UDM may further write a related error reporting instruction into a log for the operator to download and view.

Sequence numbers of the foregoing processes do not mean an execution sequence. The execution sequence of the processes should be determined based on functions and internal logic thereof, and should not constitute any limitation on an implementation process of embodiments of this application.

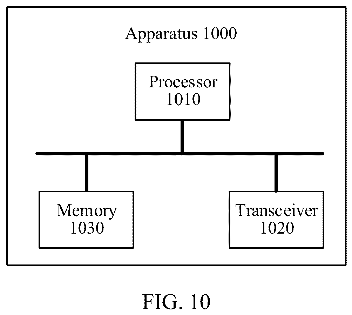

The foregoing describes in detail the method in embodiments of this application with reference to FIG. 1 to FIG. 8. The following describes in detail apparatuses in embodiments of this application with reference to FIG. 9 and FIG. 10.

FIG. 9 is a block diagram of a user offline apparatus 900 according to an embodiment of this application. As shown in FIG. 9, the apparatus 900 may include a processing unit 910 and a transceiver unit 920. The processing unit 910 is configured to determine a target user, where user data of the target user is to be migrated from a second user data management device to a first user data management device. The transceiver unit 920 is configured to send first information to a first network element accessed by the target user, where the first information indicates the first network element to drive the target user to go offline.

Optionally, the transceiver unit 920 is further configured to receive second information from the second user management device, where the second information includes location information of the target user; and the first information indicates the first network element to drive the target user located at the location information.

Optionally, the transceiver unit 920 is further configured to send third information to the second user data management device, where the third information is for requesting the location information of the target user.

Optionally, the third information is carried in a user data request UDR message, and the second information is carried in a user data answer UDA message.

Optionally, the third information is carried in a location service routing information request RIR message, and the second information is carried in a location service routing answer RIA message.

Optionally, the first information is carried in a cancel location request CLR message.

Optionally, the third information is carried in a "GET:nudm-uecm/registrations/amf-3gpp-access" message.

Optionally, the first information is carried in a "POST{DeregCallbackUri}(DeregistrationData)" message.

Optionally, the transceiver unit 920 is further configured to send the first information to a routing agent node DRA or a service communication proxy SCP, where the DRA or the SCP is configured to send the first information to the first network element.

It should be understood that, the apparatus 900 herein is embodied in a form of a functional module. The term "module" herein may refer to an application-specific integrated circuit ASIC, an electronic circuit, a processor configured to execute one or more software or firmware programs (for example, a shared processor, a dedicated processor, or a group processor) and a memory, a merge logic circuit, and/or another suitable component that supports the described function.

The apparatus 900 has a function of implementing corresponding steps performed by the first user data management device in the foregoing method embodiments. The function may be implemented by hardware, or may be implemented by executing corresponding software by hardware. The hardware or the software includes one or more modules corresponding to the function.

In this embodiment of this application, the apparatus 900 in FIG. 9 may alternatively be a chip or a chip system, for example, a system-on-a-chip (system-on-a-chip, SoC).

FIG. 10 is a block diagram of another user offline apparatus 1000 according to an embodiment of this application. As shown in FIG. 10, the apparatus 1000 includes a processor 1010, a transceiver 1020, and a memory 1030. The processor 1010, the transceiver 1020, and the memory 1030 communicate with each other through an internal connection path. The memory 1030 is configured to store instructions. The processor 1020 is configured to execute the instructions stored in the memory 1030, to control the transceiver 1020 to send a signal and/or receive a signal.

It should be understood that, the apparatus 1000 may be specifically the first user data management device in the foregoing method embodiments. Alternatively, a function of the first user data management device in the foregoing method embodiments may be integrated into a calibration apparatus 1000, and the calibration apparatus 1000 may be configured to perform the steps and/or procedures corresponding to the first user data management device in the foregoing method embodiments. Optionally, the memory 1030 may include a read-only memory and a random access memory, and provide instructions and data for the processor 1010. A part of the memory 1030 may further include a non-volatile random access memory. For example, the memory 1030 may further store information about a device type. The processor 1010 may be configured to execute the instructions stored in the memory 1030. When the processor 1010 executes the instructions, the processor 1010 may perform the steps and/or procedures corresponding to the first user data management device in the foregoing method embodiments.

In an implementation process, the steps in the foregoing method may be implemented by using a hardware integrated logical circuit in the processor, or by using instructions in a form of software. The steps in the method disclosed with reference to embodiments of this application may be directly performed and completed by a hardware processor, or may be performed and completed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor executes the instructions in the memory and completes the steps in the foregoing methods in combination with the hardware of the processor. To avoid repetition, details are not described herein again.

An embodiment of this application further provides a computer-readable storage medium. The computer-readable storage medium is configured to store computer program code, and the computer program code is used for implementing the method corresponding to the first user data management device in the foregoing embodiments.

An embodiment of this application further provides a chip system. The chip system is configured to support the first user data management device in the foregoing method embodiments in implementing functions shown in embodiments of this application.

An embodiment of this application provides a computer program product. The computer program product includes a computer program (which may also be referred to as code or instructions). When the computer program runs on a computer, the computer may perform the methods corresponding to the first user data management device in the foregoing embodiments.

A person of ordinary skill in the art may be aware that, in combination with examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that such an implementation goes beyond the scope of this application.

It may be clearly understood by a person skilled in the art that, for the purpose of convenient and brief description, for a specific working process of the foregoing system, apparatuses, and units, refer to a corresponding process in the foregoing method embodiments. Details are not described herein again.

In a plurality of embodiments provided in this application, it should be understood that, the disclosed system, apparatuses, and methods may be implemented in other manners. For example, the described apparatus embodiments described above are merely examples. For example, division of the units is merely logical function division. During actual implementation, there may be another division manner. For example, a plurality of units or components may be combined or may be integrated into another system, or some features may be ignored or not performed. In addition, displayed or discussed mutual couplings or direct couplings or communication connections may be implemented through some interfaces. The indirect couplings or communication connections between the apparatuses or units may be in electronic, mechanical, or other forms.

Units described as separate parts may or may not be physically separate, and parts displayed as units may or may not be physical units, to be specific, may be located at one position, or may be distributed on a plurality of network units. A part or all of the units may be selected based on an actual requirement to implement the objectives of the solutions of embodiments.

In addition, functional units in embodiments of this application may be integrated into one processing unit, or each of the units may exist alone physically, or two or more units are integrated into one unit.

When the function is implemented in a form of a software functional unit and sold or used as an independent product, the function may be stored in a computer-readable storage medium. Based on such an understanding, the technical solutions of this application essentially, or the part contributing to a conventional technology, or a part of the technical solutions may be implemented in a form of a software product. The computer software product is stored in a storage medium and includes a plurality of instructions for instructing a computer device (which may be a personal computer, a server, a receiving end, or the like) to perform all or a part of the steps of the method in embodiments of this application. The foregoing storage medium includes any medium that may store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A user offline method, applied to a first user data management device, wherein the method comprises:
determining a target user, wherein user data of the target user is to be migrated from a second user data management device to the first user data management device; and
sending first information to a first network element accessed by the target user, wherein the first information indicates the first network element to drive the target user to go offline.

2. The method according to claim 1, wherein before the sending first information to a first network element accessed by the target user, the method further comprises:
receiving second information from the second user management device, wherein the second information comprises location information of the target user; and
the first information indicates the first network element to drive the target user at a location in the location information.

3. The method according to claim 2, wherein before the receiving second information from the second user management device, the method further comprises:
sending third information to the second user data management device, wherein the third information is for requesting the location information of the target user.

4. The method according to claim 1 or 2, wherein the first user data management device comprises a first module and a second module; and
the sending first information to a first network element accessed by the target user comprises:
sending, by the first module, first indication information to the second module, wherein the first indication information indicates the second module to drive the target user to go offline; and
sending, by the second module, the first information to the first network element based on the first indication information.

5. The method according to claim 4, wherein the first indication information further indicates the second module to send third information; and
the method further comprises:
sending, by the second module, the third information to the second user data management device based on the first indication information.

6. The method according to claim 3, wherein the third information is carried in a user data request UDR message, and the second information is carried in a user data answer UDA message.

7. The method according to claim 3, wherein the third information is carried in a location service routing information request RIR message, and the second information is carried in a location service routing information answer RIA message.

8. The method according to claim 6 or 7, wherein the first information is carried in a cancel location request CLR message.

9. The method according to claim 3 or 5, wherein the third information is carried in a "GET:nudm-uecm/registrations/amf-3gpp-access" message.

10. The method according to claim 9, wherein the first information is carried in a "POST {DeregCallbackUri}(DeregistrationData)" message.

11. The method according to any one of claims 1 to 10, wherein the sending first information to the first network element comprises:
sending the first information to a routing agent node DRA or a service communication proxy SCP, wherein the DRA or the SCP is configured to send the first information to the first network element.

12. A user offline apparatus, comprising:
a processing unit, configured to determine a target user, wherein user data of the target user is to be migrated from a second user data management device to a first user data management device; and
a transceiver unit, configured to send first information to a first network element accessed by the target user, wherein the first information indicates the first network element to drive the target user to go offline.

13. The apparatus according to claim 12, wherein the transceiver unit is further configured to:
receive second information from the second user management device, wherein the second information comprises location information of the target user; and
the first information indicates the first network element to drive the target user at a location in the location information.

14. The apparatus according to claim 13, wherein the transceiver unit is further configured to:
send third information to the second user data management device, wherein the third information is for requesting the location information of the target user.

15. The apparatus according to claim 14, wherein the third information is carried in a user data request UDR message, and the second information is carried in a user data answer UDA message.

16. The apparatus according to claim 14, wherein the third information is carried in a location service routing information request RIR message, and the second information is carried in a location service routing information answer RIA message.

17. The apparatus according to claim 15 or 16, wherein the first information is carried in a cancel location request CLR message.

18. The apparatus according to claim 14, wherein the third information is carried in a "GET:nudm-uecm/registrations/amf-3gpp-access" message.

19. The apparatus according to claim 18, wherein the first information is carried in a "POST {DeregCallbackUri}(DeregistrationData)" message.

20. The apparatus according to any one of claims 12 to 19, wherein the transceiver unit is further configured to:
send the first information to a routing agent node DRA or a service communication proxy SCP, wherein the DRA or the SCP is configured to send the first information to the first network element.

21. A user offline apparatus, comprising a processor, wherein the processor is coupled to a memory, and the memory is configured to store instructions; and when the processor invokes the instructions, the method according to any one of claims 1 to 11 is performed or the method according to any one of claims 12 to 20 is performed.

22. A computer-readable storage medium, wherein the computer-readable storage medium stores a computer program; and when the computer program runs on a computer, the method according to any one of claims 1 to 11 is performed or the method according to any one of claims 12 to 20 is performed.

23. A computer program product, wherein the computer program product comprises instructions; and when the instructions are executed, the method according to any one of claims 1 to 11 is performed or the method according to any one of claims 12 to 20 is performed.

24. A system, wherein the system comprises a first network element and a first user data management device, and the first user data management device is configured to perform the method according to any one of claims 1 to 11.

25. A chip system, comprising a processor configured to invoke instructions from a memory and run the instructions, to cause the chip system to perform the method according to any one of claims 1 to 11.
